# EUROPEAN PATENT APPLICATION

(11) **EP 3 697 114 A1**
(43) Date of publication of application: **19.08.2020**
(21) Application number: 20150008.9
(22) Date of filing: 02.01.2020
(51) Int. Cl.: H04W 4/48, H04W 4/021

(54) **POSITIONING SYSTEM AND METHOD**

(30) Priority: 14.02.2019 US 201916275374
(71) Applicant: Aptiv Technologies Limited, St. Michael (BB)
(72) Inventor: Oman, Todd P., Greentown, IN 46936 (US); Meno, Michael L., Bailey, CO 80421 (US); Stark, Kris R., Carmel, IN 46033 (US)
(74) Representative: Manitz Finsterwald Patent- und Rechtsanwaltspartnerschaft mbB

(57) **Abstract**

A positioning system (10) includes a plurality of antennae (16), a detection module (28), a communication device (12), and controller circuit (30). The plurality of antennae (16) are located within an interior of a vehicle (14). The plurality of antennae (16) are configured to broadcast electromagnetic signals (18) from a transmitter (20). The detection module (28) is communicatively coupled with the communication device (12). The detection module (28) is configured to receive the electromagnetic signals (18) from the plurality of antennae (16). The controller circuit (30) is communicatively coupled with the detection module (28) and the communication device (12). The controller circuit (30) is configured to determine a position (32) of the communication device (12) within the interior of the vehicle (14) relative to locations of the plurality of antennae (16) based on the electromagnetic signals (18). The controller circuit (30) is further configured to restrict a function of the communication device (12) based on the position (32).

## Description

### TECHNICAL FIELD OF INVENTION

This disclosure generally relates to a positioning system, and more particularly relates to a positioning system that determines a position of a communication device within a vehicle.

### BACKGROUND OF THE DISCLOSURE

Mobile devices may cause instances of distracted driving when an operator of a vehicle uses the mobile device while operating a vehicle.

### SUMMARY OF THE DISCLOSURE

The present invention proposes to solve the above mentioned problem by providing a positioning system, comprising: a plurality of antennae located within an interior of a vehicle; the plurality of antennae configured to broadcast electromagnetic signals from a transmitter; a detection module communicatively coupled with a communication device; the detection module configured to receive the electromagnetic signals from the plurality of antennae; and a controller circuit communicatively coupled with the detection module and the communication device, the controller circuit configured to: determine a position of the communication device within the interior of the vehicle relative to locations of the plurality of antennae based on the electromagnetic signals; and restrict a function of the communication device based on the position.

According to other advantageous features of the present invention:
- the detection module is installed in the communication device.
- the detection module further includes remote keyless entry functions.
- the detection module is installed in a battery of the communication device.
- the detection module is installed in an accessory of the communication device.
- the controller circuit determines that the position of the communication device is within a driver zone when RSSI values of at least: a first at least one antenna arranged in a front portion of an interior of the vehicle are greater than the RSSI values of a second at least one antenna arranged in a rear portion of the interior of the vehicle.
- the first at least one antenna arranged in the front portion of the vehicle includes antennae arranged proximate a front center console of the vehicle, a driver side door of the vehicle, and a front passenger side door of the vehicle.
- the controller circuit further determines that the position of the communication device is within the driver zone when the RSSI values of the antennae arranged proximate the front center console of the vehicle and the driver side door of the vehicle are greater than the RSSI values of the antenna arranged proximate the front passenger side door of the vehicle.
- the first at least one antenna arranged in the front portion of the vehicle includes antennae arranged proximate a front driver side door of the vehicle and arranged proximate a front passenger side door of the vehicle.
- the controller circuit further determines that the position of the communication device is within the driver zone when the RSSI values of the antenna arranged proximate the front driver side door of the vehicle are greater than the RSSI values of the antenna arranged proximate the front passenger side door of the vehicle.
- the controller circuit reduces the driver zone to exclude a front passenger seat when the front passenger seat is occupied.
- the controller circuit is in further communication with a vehicle controller, and wherein the controller circuit further determines that the front passenger seat is occupied based on a signal received from an occupant classification system of the vehicle.
- the plurality of antennae are further configured to transmit the electromagnetic signals from a remote keyless entry (RKE) system.
- the plurality of antennae are further configured to transmit the electromagnetic signals from a passive entry passive start (PEPS) system.

The present invention also proposes a positioning method of comprising: broadcasting electromagnetic signals from a transmitter, with a plurality of antennae located within an interior of a vehicle; receiving the electromagnetic signals from the plurality of antennae with a detection module communicatively coupled with a communication device; determining, with a controller circuit communicatively coupled with the detection module and the communication device, a position of the communication device within the interior of the vehicle based on the electromagnetic signals; the position relative to locations of the plurality of antennae; and restricting, with the controller circuit, a function of the communication device based on the position.

Preferably the method further comprises:
- the detection module is installed in the communication device.
- the detection module further includes remote keyless entry functions.
- the detection module is installed in a battery of the communication device.
- the detection module is installed in an accessory of the communication device.
- the controller circuit determines that the position of the communication device is within a driver zone when RSSI values of at least: a first at least one antenna arranged in a front portion of an interior of the vehicle are greater than the RSSI values of a second at least one antenna arranged in a rear portion of the interior of the vehicle.
- the first at least one antenna arranged in the front portion of the vehicle includes antennae arranged proximate a front center console of the vehicle, a driver side door of the vehicle, and a front passenger side door of the vehicle.
- the controller circuit further determines that the position of the communication device is within the driver zone when the RSSI values of the antennae arranged proximate the front center console of the vehicle and the driver side door of the vehicle are greater than the RSSI values of the antenna arranged proximate the front passenger side door of the vehicle.
- the first at least one antenna arranged in the front portion of the vehicle includes antennae arranged proximate a front driver side door of the vehicle and arranged proximate a front passenger side door of the vehicle.
- the controller circuit further determines that the position of the communication device is within the driver zone when the RSSI values of the antenna arranged proximate the front driver side door of the vehicle are greater than the RSSI values of the antenna arranged proximate the front passenger side door of the vehicle.
- the controller circuit reduces the driver zone to exclude a front passenger seat when the front passenger seat is occupied.
- the controller circuit is in further communication with a vehicle controller, and wherein the controller circuit further determines that the front passenger seat is occupied based on a signal received from an occupant classification system of the vehicle.
- the plurality of antennae are further configured to transmit the electromagnetic signals from a remote keyless entry (RKE) system.
- the plurality of antennae are further configured to transmit the electromagnetic signals from a passive entry passive start (PEPS) system.

### BRIEF DESCRIPTION OF DRAWINGS

The present invention will now be described, by way of example with reference to the accompanying drawings, in which:
Fig. 1 is an illustration of a positioning system in accordance with one embodiment;
Fig. 2 is an illustration of a localization protocol broadcast by the system of Fig. 1 in accordance with one embodiment;
Fig. 3 is an illustration of the positioning system of Fig. 1 installed in a vehicle in accordance with one embodiment;
Fig. 4A is an illustration of a broadcast sequence of the positioning system of Fig. 2 in accordance with one embodiment;
Fig. 4B is an illustration of another broadcast sequence of the positioning system of Fig. 2 in accordance with one embodiment;
Fig. 5A is an illustration of a driver zone within the interior of the vehicle of Fig. 2 in accordance with one embodiment;
Fig. 5B is a plot of received signal strength indicator values of the system in Fig. 4A in accordance with one embodiment;
Fig. 6A is another illustration of a driver zone within the interior of the vehicle in accordance with one embodiment;
Fig. 6B is a plot of the received signal strength indicator values of the system in Fig. 6A in accordance with one embodiment;
Fig. 7A is an illustration of another driver zone within the interior of the vehicle of Fig. 2 in accordance with one embodiment;
Fig. 7B is a plot of received signal strength indicator values of the system in Fig. 7A in accordance with one embodiment;
Fig. 8A is an illustration of the positioning system of Fig. 1 with key fob functions integrated into a back side of a mobile phone in accordance with one embodiment;
Fig. 8B is an illustration of the positioning system of Fig. 1 with key fob functions integrated into an accessory of the mobile phone in accordance with one embodiment;
Fig. 8C is an illustration of a graphical user interface of the positioning system of Fig. 1 with key fob functions integrated into a mobile phone display in accordance with one embodiment;
Fig. 8D is an illustration of another graphical user interface of the positioning system of Fig. 1 with key fob functions integrated into a mobile phone display in accordance with one embodiment; and
Fig. 9 is a flow chart illustrating a positioning method in accordance with another embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

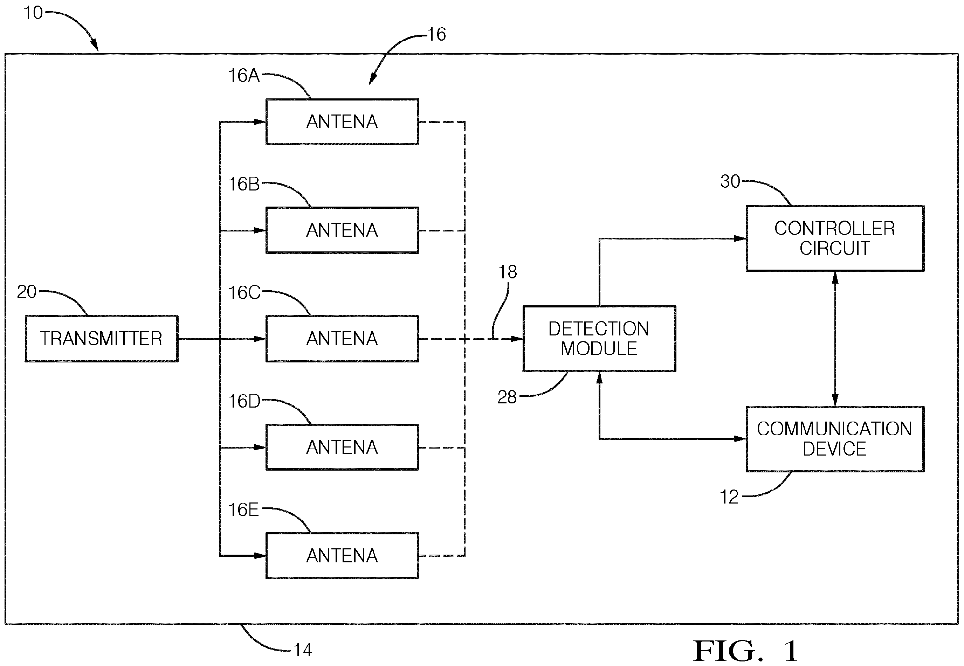

Fig. 1 illustrates an example of a positioning 10, hereafter referred to as the system 10. As will be described in more detail below, the system 10 may provide various improvements over other detection systems. For example, the system 10 may reduce occurrences of distracted driving from a communication device 12 accessible to an operator of a vehicle 14 by disabling the communication device 12 when likely used by the operator. As used herein, the communication device 12 may be a smartphone, a computer, a tablet, a laptop, a wearable device (e.g., a smartwatch, etc.) or any other portable device that allows a communication with at least one other device and/or other system.

The system 10 includes a plurality of antennae 16 located within an interior of the vehicle 14. The plurality of antennae 16 include a first at least one antenna arranged in a front portion of an interior of the vehicle 14 and a second at least one antenna arranged in a rear portion of the interior of the vehicle 14. The plurality of antennae 16 are configured to broadcast electromagnetic signals 18 (i.e., radio frequency signals) from a transmitter 20. In some examples, the plurality of antennae 16 are configured to transmit low frequency electromagnetic signals 18 in a frequency band of about 125 kHz (i.e., 100kHz - 150kHz), such as those transmitted from a Passive Entry Passive Start system (PEPS system) that may be installed on the vehicle 14. In some examples, the plurality of antennae 16 are configured to transmit high frequency electromagnetic signals 18 in a frequency band of about 315MHz (i.e., 260MHz - 470MHz), such as those transmitted from a Remote Keyless Entry system (RKE system). In the example illustrated in Fig. 1, the plurality of antennae 16 are installed in the vehicle 14 as part of the PEPS system. Transmission of the low frequency electromagnetic signals 18 may be advantageous because the low frequency electromagnetic signals 18 in the above mentioned low frequency band are able to pass through a human body with little to no distortion (i.e., attenuation), thereby increasing an accuracy of detecting the electromagnetic signal 18 from the plurality of antennae 16, the advantage of which will become evident in the following paragraphs.

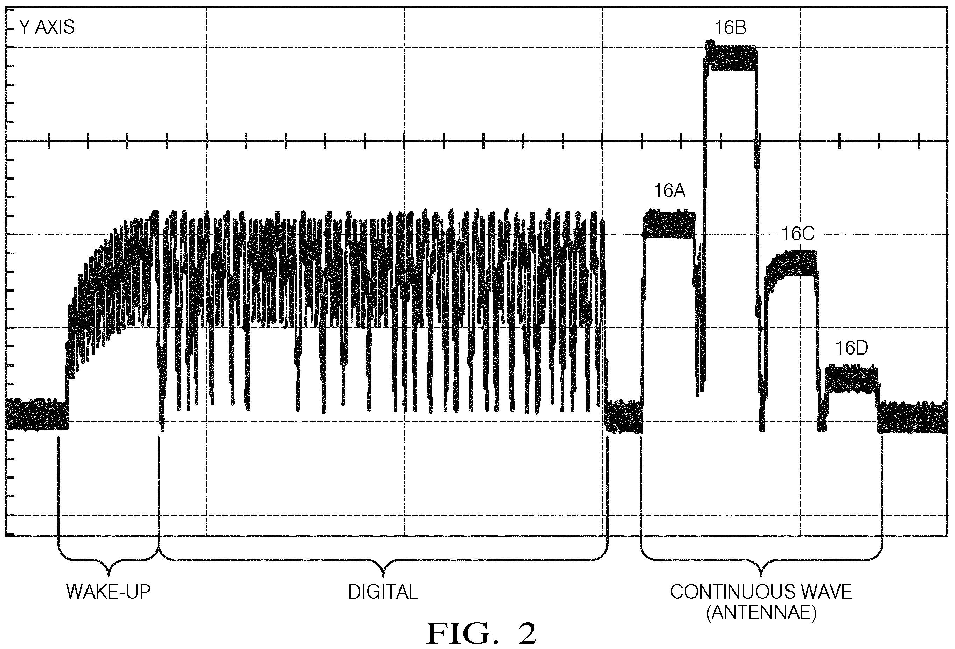

The transmitter 20 may be any transmitter 20 suitable to broadcast the electromagnetic signals 18. In an example, the transmitter 20 is a component of the PEPS system and/or the RKE system. The transmitter 20 may be capable of transmitting both digital and continuous wave (i.e., analog) electromagnetic signals 18 to the plurality of antennae 16. One such device is the ATA5291, marketed as a PEPS Driver and Immobilizer Base Station, from Atmel Corporation of San Jose, California, USA. In an example, the transmitter 20 may be programmed to transmit a localization protocol (i.e., a digital message) including a preamble, a universal wake-up ID, and a data field that designates the message is a system 10 broadcast from the plurality of antennae 16. The digital message may be followed by a continuous wave broadcast to each of the plurality of antennae 16. An example of a digital and continuous wave transmission is shown in Fig. 2. As illustrated in Fig. 2, the continuous wave portion of the broadcast represents Received Signal Strength Indicator values 26 (RSSI values 26) of the radio signals detected by a detection module 28. The radio signals are broadcast from four antennae (16A-16D) that are distributed about the interior of the vehicle 14. The RSSI values 26 are a measurement of the power present in the received radio signal. Larger RSSI values 26 indicate stronger received radio signals and are inversely related to a distance between the signal source (i.e. the broadcasting antenna) and the detection module 28. That is, the stronger the detected radio signal (i.e., the larger RSSI value 34), the shorter the distance between the broadcasting antenna and the detection module 28.

As set forth above, in some examples, the system 10 may utilize an existing plurality of antennae 16 from the PEPS system and/or the RKE system installed on the vehicle 14 to generate RSSI values 26, which may be used to determine a location of a user, such as a driver of an automobile. In some examples, utilizing the existing plurality of antennae 16 associated with the PEPS system and/or the RKE system may be advantageous in comparison with other techniques for determining a location of a communication device 12 within the vehicle 14, because little or no modifications to an existing vehicle 14 are required to determine the location of the communication device 12.

In other examples, other transmitters transmit signals to other plurality of antennae 16 located within the interior of the vehicle 14 that employ other wireless protocols to generate the RSSI values 26. Examples of other wireless protocols include BLUETOOTH®, Wi-Fi, or near field communication (NFC) and may utilize antennae specific to the frequency band of transmission. In an example, the transmitter 20 transmits high frequency electromagnetic signals 18 having the frequency band of about 2.4 GHz that are typically used by wireless local area networks (WLAN). In another example, the transmitter 20 transmits high frequency electromagnetic signals 18 having the frequency band of about 5.9 GHz that are typically used by an intelligent transportation systems (ITS) band of Wi-Fi.

The system 10 also includes the detection module 28 communicatively coupled with the communication device 12. The detection module 28 is configured to receive the electromagnetic signals 18 broadcast from the plurality of antennae 16 and to communicate the signal strength to the communication device 12 through a transmission link having standard wireless and/or wired interfaces, such as BLUETOOTH®, Wi-Fi, NFC, universal serial bus (USB), Apple Lightning, universal asynchronous receiver/transmitter (UART), etc. The detection module 28 includes a three dimensional antenna (not shown) to more accurately detect the electromagnetic signals 18 regardless of the orientation of the detection module 28. That is, the three dimensional antenna enables the detection module 28 to calculate a geometric average of the strength of the electromagnetic signals 18 so that the strength is not affected by the orientation of the detection module 28. Any detection module 28 suitable to receive the electromagnetic signals 18 and communicate with the communication device 12 may be used. One such detection module 28 is the ATA5700/ATA5702 from Microchip Technology Inc. of Chandler, Arizona, USA.

The system 10 also includes a controller circuit 30 communicatively coupled with the detection module 28 and the communication device 12. The controller circuit 30 may include a processor (not shown) such as a microprocessor or other control circuitry such as analog and/or digital control circuitry. The control circuitry may include one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. The controller circuit 30 may also combine custom hard-wired logic, ASICs, or FPGAs with custom programming to accomplish the techniques. The controller circuit 30 may include a memory or storage media (not shown), including non-volatile memory, such as electrically erasable programmable read-only memory (EEPROM) for storing one or more routines, thresholds, and captured data. The EEPROM stores data and allows individual bytes to be erased and reprogrammed by applying special programming signals. The controller circuit 30 may include other examples of non-volatile memory, such as flash memory, read-only memory (ROM), programmable read-only memory (PROM), and erasable programmable read-only memory (EPROM). The controller circuit 30 may include volatile memory, such as dynamic random-access memory (DRAM), static random-access memory (SRAM). The one or more routines may be executed by the processor to perform steps for determining a position 32 of the communication device 12 within the vehicle 14 based on signals received by the controller circuit 30 from the detection module 28 as described herein. In an example, the detection module 28 includes the controller circuit 30 (i.e., the controller circuit 30 is integral to the detection module 28 electrical packaging). In another example, the detection module 28 and the controller circuit 30 are separate devices. The detection module 28 and the controller circuit 30 may also be included in the communication device 12, as will be described in more detail below.

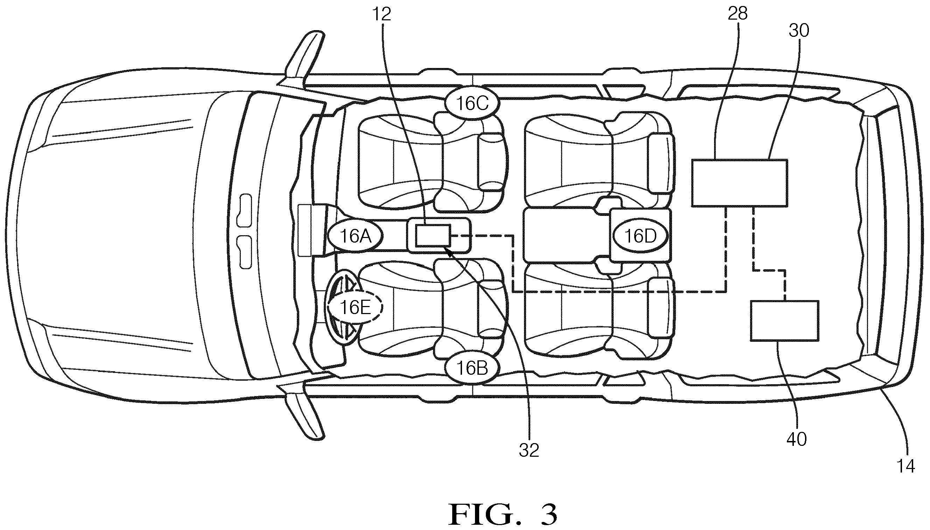

Fig. 3 illustrates an example of the plurality of antennae 16 (denoted as 16A-16E) with locations distributed about the interior of the vehicle 14, and, in the example of Fig. 3, the communication device 12 is located on a front center console of the vehicle 14. It will be appreciated that additional antennae 16 beyond antennae 16A-16E depicted in the example of Fig. 3 may exist within the vehicle 14 that may be associated with the PEPS system and/or the RKE system (e.g., arranged proximate a trunk or a rear hatch of the vehicle 14). In the example of Fig. 3, the plurality of antennae 16 include at least one antenna 16A arranged proximate the front center console of the vehicle 14, at least one antenna 16B arranged proximate a driver side door (e.g., proximate an exterior door handle or B-pillar), at least one antenna 16C arranged proximate a front passenger side door, and at least one antenna 16D arranged proximate a rear seat of the vehicle 14. In an example where the vehicle 14 does not include the front center console, antenna 16A may be arranged proximate a center of a lower dash of the vehicle 14. In an optional example, the plurality of antennae 16 include at least one antenna 16E arranged proximate a steering wheel of the vehicle 14, such as beneath a headliner of the vehicle's 14 interior trim, or below a driver's seat to more accurately detect the position 32 of the communication device 12 relative to the plurality of antennae 16. In an example, antennae 16A and 16B may be omitted from the system 10 and replaced by antenna 16E, reducing both cost and complexity of the system 10.

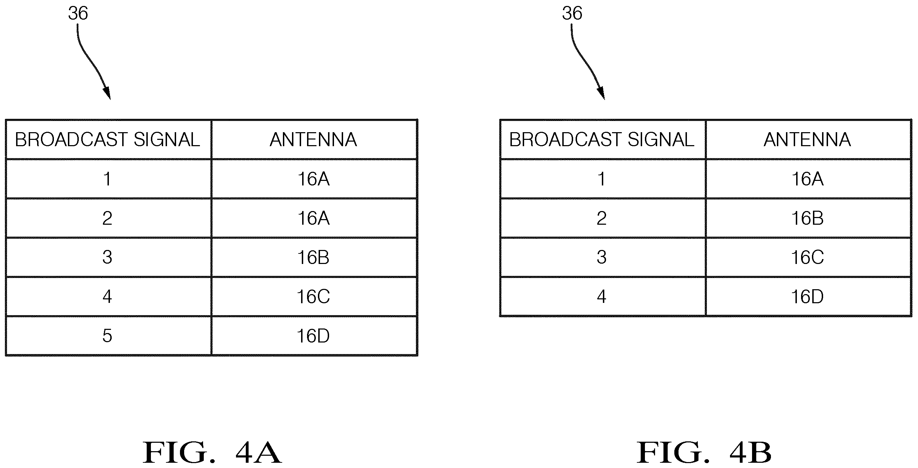

The controller circuit 30 is configured to determine the position 32 of the communication device 12 within the interior of the vehicle 14 relative to the locations of the plurality of antennae 16. The controller circuit 30 determines the position 32 based on the electromagnetic signals 18 broadcast from each of the antennae 16A-16D using the RSSI values 26. In order for the controller circuit 30 to determine the position 32 of the communication device 12, the controller circuit 30 must associate the detected electromagnetic signal 18 with a specific antenna location. In an example, the transmitter 20 transmits the electromagnetic signals 18 to the plurality of antennae 16 in a defined broadcast sequence 36. The detection module 28 determines an identity of each of the antennae 16A-16D based on the defined broadcast sequence 36 that is also stored in the memory of the controller circuit 30. For example, the broadcast sequence 36 includes transmitting a first electromagnetic signal 18 to the antenna 16A, a second electromagnetic signal 18 to antenna 16B, a third electromagnetic signal 18 to antenna 16C, and a fourth electromagnetic signal 18 to antenna 16D. The broadcast sequence 36 is repeated at a regular time interval (every 10 seconds, for example) so that the position 32 of the communication device 12 may be determined as the communication device 12 may be moved about the vehicle 14 while the vehicle 14 is in use and/or moving. Strategies to determine the start of the broadcast sequence 36 may include two broadcasts from antenna 16A at the beginning of each repeated broadcast sequence 36. An example of the broadcast sequence 36 is shown in Fig. 4A. Another example of the broadcast sequence 36, where an optional antenna 16E replaces antennae 16A and 16B, is shown in Fig. 4B.

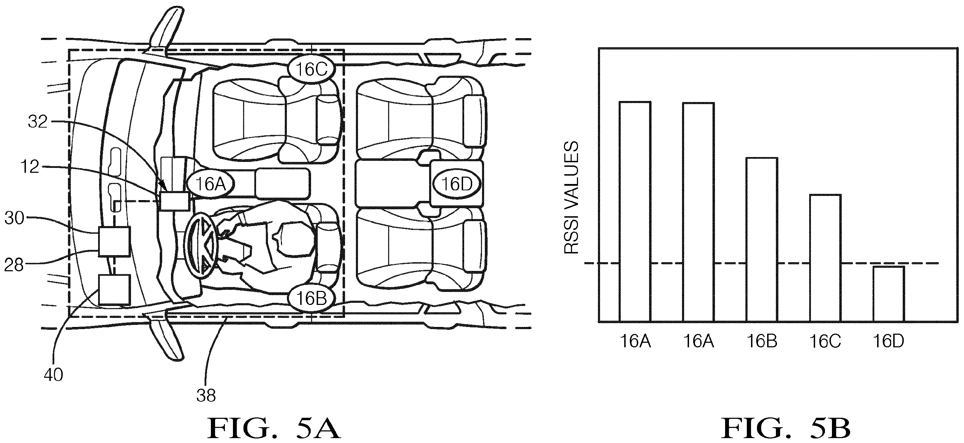

Fig. 5A illustrates an example of a driver zone 38 within the interior of the vehicle 14. In this example, the operator is occupying the driver's seat, the front passenger seat is unoccupied, and the communication device 12 is on a front dash of the vehicle 14 in front of the operator. The controller circuit 30 is in further communication with a vehicle controller (not shown) and further determines whether the front passenger seat is occupied based on a signal received from an occupant classification system 40 (OCS 40) installed in the vehicle 14. In some examples, the vehicle controller communicates the signal from the OCS 40 to the controller circuit 30. In other examples, the OCS 40 communicates the signal to the controller circuit 30. The OCS 40 detects a presence of a passenger. In some examples, the OCS 40 detects a passenger's approximate weight. In some examples, the OCS 40 detects the front seat passenger's seating position. In some examples, the OCS 40 detects the presence of the passenger using a pressure-based system installed in the passenger seat. In other examples, the OCS 40 detects the passenger using a camera-based system, that may also include thermal imaging to determine whether the passenger is a living being. The OCS 40 may adjust an inflation force of a passenger side air bag (i.e., supplemental restraint) based on the classification of the occupant. The driver zone 38 defines an area within a reach of the driver and includes at least the driver seat and the front passenger seat, as illustrated by the dashed outline in Fig. 5A. When the communication device 12 is within the driver zone 38 (i.e., accessible to the operator), an ability to use the communication device 12 may distract the operator while driving the vehicle 14. It will be appreciated that distracted driving is dangerous, claiming thousands of lives on roadways around the world each year.

The controller circuit 30 further determines whether the position 32 of the communication device 12 is within the driver zone 38 based on the RSSI values 26. Fig. 5B illustrates the RSSI values 26 determined by the controller circuit 30 from the example illustrated in Fig. 5A. As shown in Fig. 5B, at position 32, the detection module 28 detected the electromagnetic signals 18 from antenna 16A has substantially larger RSSI values 26 than the electromagnetic signals 18 from antenna 16D. The controller circuit 30 determines that the position 32 of the communication device 12 is within the driver zone 38 when the RSSI values 26 of at least one antenna arranged in the front portion of the interior of the vehicle 14 are greater than the RSSI values 26 of at least one antenna arranged in the rear portion of the interior of the vehicle 14. That is, the controller circuit 30 determines that the communication device 12 is located in the front (driver or passenger seat) of the vehicle 14, and is therefore within the defined driver zone 38. As a result of determining that the communication device 12 is within the defined driver zone 38, the controller circuit 30 may inhibit the use of one or more functions of the communication device 12, as will be described in more detail below.

Figs. 5A and 5B depict an example in which the driver zone 38 is defined to include an area surrounding both the front driver and passenger seats in the vehicle 14. The example of Figs. 5A and 5B may be advantageous, because it enables the detection of the communication device 12 within the reach of the operator (e.g., driver), and inhibiting one or more functions of communication device 12 to avoid dangerous distraction of the operator. In some cases, the example depicted in Figs. 5A and 5B may be undesirable for a passenger travelling in the passenger seat of the vehicle 14, because although the passenger does not need to actively pay attention to the task of operating the vehicle 14, the passenger's communication device (not depicted in Fig. 5A) may be disabled just like the communication device 12 of the driver.

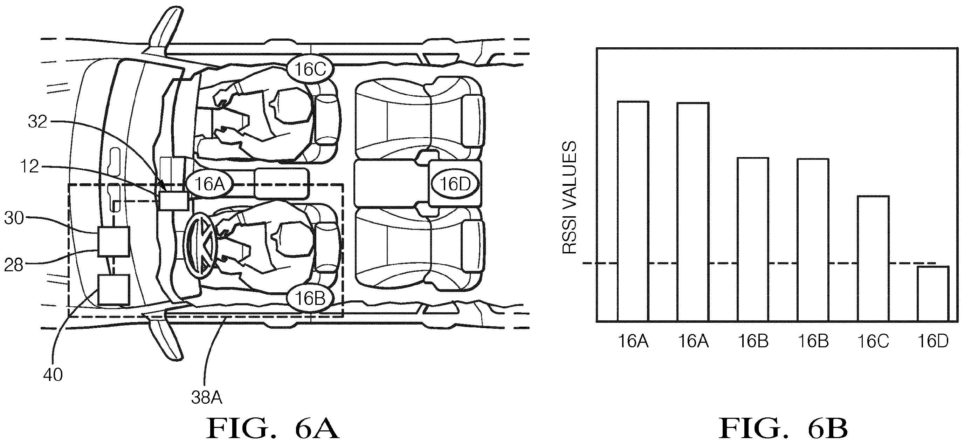

Fig. 6A depicts one example in which the system 10 is configured to reduce a driver zone 38 within the interior of the vehicle 14 based on detection of a passenger in the passenger seat of the vehicle 14. In this example, the operator is occupying the driver's seat, a passenger is occupying the front passenger seat, and the communication device 12 is on the front dash of the vehicle 14 in front of the operator. The controller circuit 30 determines that the front passenger seat is occupied based on the signal received from the OCS 40 as described above. As shown in the example of Fig. 6A, the system 10 may create a reduced driver zone 38A by additionally comparing the relative RSSI values 26 associated with antennae 16B and 16C. For example, Fig. 6B illustrates the RSSI values 26 determined by the controller circuit 30 from the example illustrated in Fig. 6A. As shown in Fig. 6B, at position 32, the detection module 28 detected the electromagnetic signals 18 from antennae 16A has substantially larger RSSI values 26 than the electromagnetic signals 18 from antenna 16D. The controller circuit 30 determines that the communication device 12 is located in the front (driver or passenger seat) of the vehicle 14. The controller circuit 30 further determines that the electromagnetic signals 18 from antenna 16B has substantially larger RSSI values 26 than the electromagnetic signals 18 from antenna 16C, and is therefore within the reduced driver zone 38A. As a result of determining that the communication device 12 is within the reduced driver zone 38A, the controller circuit 30 may inhibit the use of one or more functions of the communication device 12, as will be described in more detail below.

It will be appreciated that the system 10 differentiates between the communication device 12 that is within the reduced driver zone 38A and another communication device (not shown) that may be in use by the front passenger. In an example where the front passenger is using another communication device, the RSSI values 26 of antenna 16C will be substantially greater than the RSSI values 26 of antenna 16B. In this example, the controller circuit 30 may not inhibit the use of one or more functions of one or more other communication devices (e.g., the passenger's communication device).

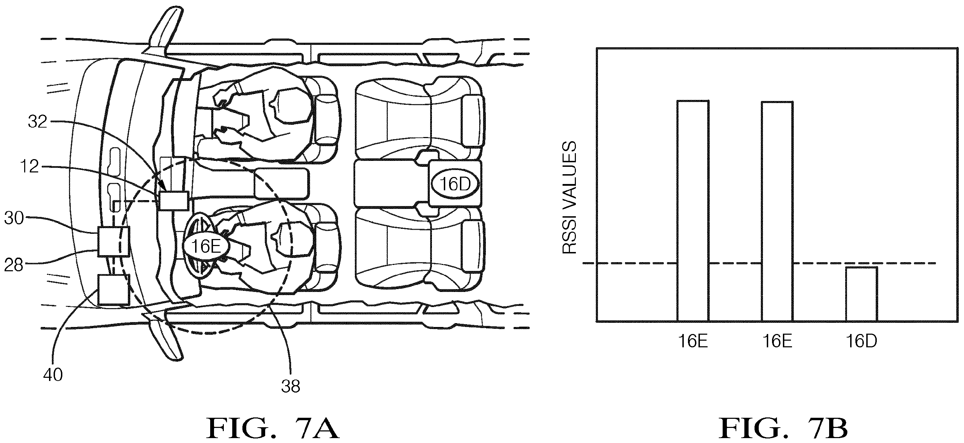

Fig. 7A illustrates an example where the optional antenna 16E replaces antennae 16A and 16B, and the broadcast sequence 36 is that of Fig. 4B. As in Fig. 6A, the operator is occupying the driver's seat, the passenger is occupying the front passenger seat, and the communication device 12 is on the front dash of the vehicle 14 in front of the operator. The controller circuit 30 determines that the position 32 of the communication device 12 is within the driver zone 38 when the RSSI value 26 of the electromagnetic signals 18 from antennae 16E is greater than the RSSI value 26 of the electromagnetic signals 18 from antenna 16D.

In an example, the controller circuit 30 determines that the position 32 of the communication device 12 is within the driver zone 38 when the RSSI value 26 of the electromagnetic signals 18 from antennae 16E is greater than a threshold. In this example, antenna 16D may be omitted from the determination of the position 32 of the communication device 12. The threshold may be user defied and may be established based on dimensions and layout of the interior of the vehicle 14. It will be appreciated that when the single antenna 16E is used to determine the position 32 of the communication device 12, a spherical detection zone may be defined around antenna 16E, and a radius of the spherical detection zone is defined by the threshold.

Referring back to Fig. 6B, in an example, when the OCS 40 determines the front passenger seat is occupied, the vehicle controller requests the transmitter 20 to repeat the transmission of the electromagnetic signals 18 from antenna 16B as an indication to the controller circuit 30 that the front passenger seat is occupied. The controller circuit 30 uses this indication as a trigger event to reduce the driver zone 38 (i.e., the reduced driver zone 38A), as illustrated by the dashed outline in Fig. 6A.

In another example, the vehicle 14 is not equipped with the OCS 40 and the system 10 is unable to determine whether a passenger is occupying the front passenger seat. In this example, the system 10 defines the reduced driver zone 38A as illustrated in Fig. 6A, and employs the same logic for determining whether the communication device 12 is within the reduced driver zone 38A as described above for Fig. 6B.

The controller circuit 30 is further configured to restrict a function of the communication device 12 based on the position 32 of the communication device 12 within the vehicle 14. When the controller circuit 30 determines that the communication device 12 is within the driver zone 38 or within the reduced driver zone 38A, the controller circuit 30 enables a driving mode 42 of the communication device 12 to reduce the occurrence of distracted driving. The driving mode 42, also referred to as a "do not disturb while driving" setting of the communication device 12, disables specific functions of the communication device 12, such as short message service (SMS - i.e. text messaging), and/or incoming phone calls. Other features may be restricted based on the manufacturer's settings for the communication device 12 and/or based on elections by the user of the communication device 12.

As described above, the controller circuit 30 enables the driving mode 42 of the communication device 12 based on the determination that the communication device 12 is within the driver zone 38. In another example, the controller circuit 30 enables the driving mode 42 when the communication device 12 is within the driver zone 38 while the vehicle 14 is moving, and disables the driving mode 42 when the communication device 12 is within the driver zone 38 while the vehicle 14 is stopped. In an example, the controller circuit 30 determines that the vehicle 14 is moving based on signals from an inertial measurement unit (IMU - not shown) that is installed in the communication device 12. In another example, the controller circuit 30 determines that the vehicle 14 is moving based on signals from an IMU that is installed in vehicle 14. The typical IMU includes a three dimensional (3D) accelerometer, a 3D gyroscope, and a 3D magnetomer to detect motion. In yet another example, the controller circuit 30 determines that the vehicle 14 is moving based on signals from the vehicle controller that is in communication with a wheel speed sensor mounted to a wheel of the vehicle 14.

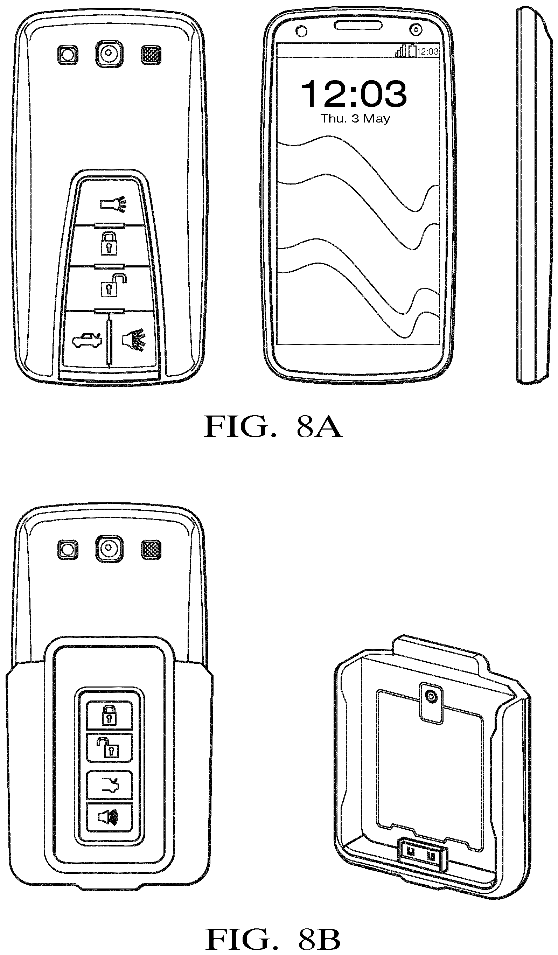

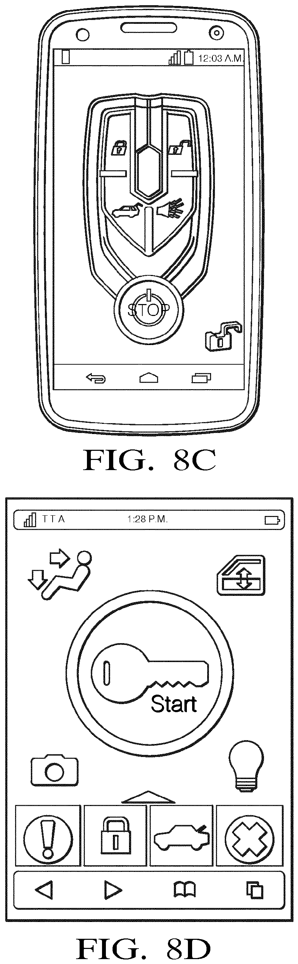

Figs. 8A-8D illustrate examples of the system 10 integrated with the communication device 12. In an example, the detection module 28 is installed within in the communication device 12. Installing the detection module 28 within the communication device 12 may be beneficial by inhibiting the operator from disabling the system 10. Other benefits of installing the detection module 28 within the communication device 12 include ease of use by the user, manufacturing efficiencies, and a lower cost of packaging compared to a separate device. In another example, the detection module 28 is installed in a battery of the communication device 12. In yet another example, the detection module 28 is installed in an accessory of the communication device 12, such as a protective case, a camera module, etc. In yet another example, the detection module 28 is installed in a docking station of the communication device 12 that may be connected to the vehicle's 14 infotainment system.

According to the examples described above, where the detection module 28 is included as part of communication device 12 and/or is part of an accessory of communication device 12 (e.g., a case or battery), the detection module 28 may be used not only for determining the relative position 32 of communication device 12 within the vehicle 14 as described herein, the detection module 28 may also be used to perform functionality of a PEPS and/or remote keyless entry device (e.g., a key fob). For example, the detection module 28 may be configured to receive the low frequency electromagnetic signals 18 to determine whether or not to unlock the vehicle 14, remotely start the engine of the vehicle 14, or other functionality typically associated with a remote key fob. In addition, in examples where detection module 28 is installed in the communication device 12, installed in the battery of the communication device 12, and or installed in an accessory of communication device 12, the communication device 12 can serve a dual purpose, replacing the key fob and/or also allowing for localization of communication device 12.

According to the examples described above, where the detection module 28 is included as part of the communication device 12 and/or is part of an accessory of communication device 12, to prevent the user from defeating the restriction of functions by removing or disabling the detection module 28, an operating system of the communication device 12 may default to the driving mode 42 when the detection module 28 is not present and/or disabled.

It will be appreciated that in some vehicle 14 installations, the locations of the plurality of antennae 16 may not allow for a symmetric placement of opposing antennae. For example antenna 16B may be located closer to a front of the vehicle 14 compared to the location of antenna 16C. In these examples of non-symmetrical antennae installation, the system 10 either increases or decreases a drive current for the low frequency electromagnetic signals 18 to equalize the electromagnetic signals 18 at a desired boundary of the driver zone 38 and/or the reduced driver zone 38A.

Referring again to Fig. 6A, the plurality of antennae 16 are symmetrically placed within the vehicle 14. In an example, the boundary of the reduced driver zone 38A is desired to be adjusted to create a larger area (e.g., to include all of the front center console). The boundary of the reduced driver zone 38A may be adjusted by adding a multiplier value to the RSSI values 26 of a particular antenna. For example, a multiplier value of 1.2 may be applied to the RSSI values 26 from antenna 16B to increase a width of the reduced driver zone 38A by twenty percent. The controller circuit 30 applies the multiplier value to a decision logic to determine whether the communication device 12 is within the adjusted reduced driver zone 38A.

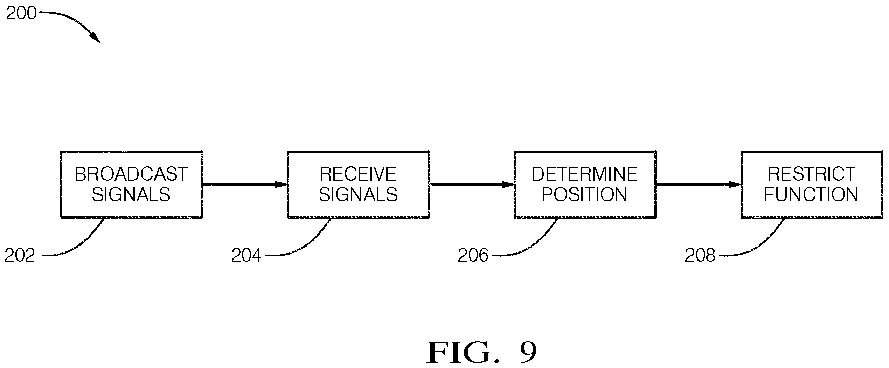

Fig. 9 is a flow chart illustrating another example of a detection method 200.

Step 202, BROADCAST SIGNALS, includes broadcasting electromagnetic signals 18 from a transmitter 20, with a plurality of antennae 16 located within an interior of a vehicle 14, as described above. In an example, the electromagnetic signals 18 are low frequency electromagnetic signals 18 transmitted from the PEPS system as described above. In another example the electromagnetic signals 18 are high frequency electromagnetic signals 18 as described above.

Step 204, RECEIVE SIGNALS, includes receiving the electromagnetic signals 18 from the plurality of antennae 16 with a detection module 28, as described above. The detection module 28 is communicatively coupled with a communication device 12, and in an example is installed in the communication device 12. In an example, the detection module 28 further includes PEPS and/or remote keyless entry functions as described above.

Step 206, DETERMINE POSITION, includes determining, with a controller circuit 30 communicatively coupled with the detection module 28 and the communication device 12, a position 32 of the communication device 12 within the interior of the vehicle 14. The position 32 is based on the electromagnetic signals 18 and is relative to a location of the communication device 12 with respect to locations of the plurality of antennae 16, as described above. The controller circuit 30 determines that the position 32 of the communication device 12 is within a driver zone 38 based on RSSI values 26 of the plurality of antennae 16 as described above. In some examples, the controller circuit 30 reduces the driver zone 38 to exclude a front passenger seat when the front passenger seat is occupied, as described above.

Step 208, RESTRICT FUNCTION, includes restricting, with the controller circuit 30, a function of the communication device 12 based on the position 32. The controller circuit 30 enables a driving mode 42 of the communication device 12 to reduce the occurrence of distracted driving. The driving mode 42 is enabled when the controller circuit 30 determines that the communication device 12 is within the driver zone 38 or within the reduced driver zone 38A, as described above.

Accordingly, a positioning system 10 (the system 10), a controller circuit 30 for the system 10, and a detection method 200 are provided. The system 10 is an improvement over other positioning systems because the system 10 determines that the communication device 12 is within the driver zone 38 and may distract the driver.

While this invention has been described in terms of the preferred embodiments thereof, it is not intended to be so limited, but rather only to the extent set forth in the claims that follow. "One or more" includes a function being performed by one element, a function being performed by more than one element, e.g., in a distributed fashion, several functions being performed by one element, several functions being performed by several elements, or any combination of the above. It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact. The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

## Claims

1. A positioning system (10), comprising:
a plurality of antennae (16) located within an interior of a vehicle (14);
the plurality of antennae (16) configured to broadcast electromagnetic signals (18) from a transmitter (20);
a detection module (28) communicatively coupled with a communication device (12);
the detection module (28) configured to receive the electromagnetic signals (18) from the plurality of antennae (16); and
a controller circuit (30) communicatively coupled with the detection module (28) and the communication device (12), the controller circuit (30) configured to:
determine a position (32) of the communication device (12) within the interior of the vehicle (14) relative to locations of the plurality of antennae (16) based on the electromagnetic signals (18); and
restrict a function of the communication device (12) based on the position (32).

2. The positioning system (10) in accordance with claim 1, wherein the detection module (28) is installed in the communication device (12).

3. The positioning system (10) in accordance with claim 2, wherein the detection module (28) further includes remote keyless entry functions.

4. The positioning system (10) in accordance with any one of the preceding claims, wherein the detection module (28) is installed in a battery of the communication device (12).

5. The positioning system (10) in accordance with any one of the preceding claims, wherein the detection module (28) is installed in an accessory of the communication device (12).

6. The positioning system (10) in accordance with any one of the preceding claims, wherein the controller circuit (30) determines that the position (32) of the communication device (12) is within a driver zone (38) when RSSI values (26) of at least:
a first at least one antenna arranged in a front portion of an interior of the vehicle (14) are greater than the RSSI values (26) of a second at least one antenna arranged in a rear portion of the interior of the vehicle (14).

7. The positioning system (10) in accordance with claim 6, wherein the first at least one antenna arranged in the front portion of the vehicle (14) includes antennae (16) arranged proximate a front center console of the vehicle (14), a driver side door of the vehicle (14), and a front passenger side door of the vehicle (14).

8. The positioning system (10) in accordance with claim 7, wherein the controller circuit (30) further determines that the position (32) of the communication device (12) is within the driver zone (38) when the RSSI values (26) of the antennae (16) arranged proximate the front center console of the vehicle (14) and the driver side door of the vehicle (14) are greater than the RSSI values (26) of the antenna arranged proximate the front passenger side door of the vehicle (14).

9. The positioning system (10) in accordance with claim 6, wherein the first at least one antenna arranged in the front portion of the vehicle (14) includes antennae (16) arranged proximate a front driver side door of the vehicle (14) and arranged proximate a front passenger side door of the vehicle (14).

10. The positioning system (10) in accordance with claim 9, wherein the controller circuit (30) further determines that the position (32) of the communication device (12) is within the driver zone (38) when the RSSI values (26) of the antenna arranged proximate the front driver side door of the vehicle (14) are greater than the RSSI values (26) of the antenna arranged proximate the front passenger side door of the vehicle (14).

11. The positioning system (10) in accordance with claim 6, wherein the controller circuit (30) reduces the driver zone (38) to exclude a front passenger seat when the front passenger seat is occupied.

12. The positioning system (10) in accordance with claim 11, wherein the controller circuit (30) is in further communication with a vehicle (14) controller, and wherein the controller circuit (30) further determines that the front passenger seat is occupied based on a signal received from an occupant classification system (40) of the vehicle (14).

13. The positioning system (10) in accordance with any one of the preceding claims, wherein the plurality of antennae (16) are further configured to transmit the electromagnetic signals (18) from a remote keyless entry (RKE) system.

14. The positioning system (10) in accordance with claim 13, wherein the plurality of antennae (16) are further configured to transmit the electromagnetic signals (18) from a passive entry passive start (PEPS) system.

15. A positioning method (200), comprising:
broadcasting (202) electromagnetic signals (18) from a transmitter (20), with a plurality of antennae (16) located within an interior of a vehicle (14);
receiving (204) the electromagnetic signals (18) from the plurality of antennae (16) with a detection module (28) communicatively coupled with a communication device (12);
determining (206), with a controller circuit (30) communicatively coupled with the detection module (28) and the communication device (12), a position (32) of the communication device (12) within the interior of the vehicle (14) based on the electromagnetic signals (18);
the position (32) relative to locations of the plurality of antennae (16); and
restricting (208), with the controller circuit (30), a function of the communication device (12) based on the position (32).
